# EUROPÄISCHE PATENTSCHRIFT

(11) **EP 2 004 402 B1**
(45) Veröffentlichungstag und Bekanntmachung des Hinweises auf die Patenterteilung: **15.11.2017**
(21) Anmeldenummer: 07726743.3
(22) Anmeldetag: 09.03.2007
(51) Int. Cl.: B32B 27/36, B65D 65/46

(54) **PEELFÄHIGE, SIEGELBARE PLA-FOLIE**
PEELABLE SEALABLE PLA FILM
FILM DU TYPE "PLA" PELABLE ET SCELLABLE

(30) Priorität: 31.03.2006 DE 102006014974
(43) Veröffentlichungstag der Anmeldung: 24.12.2008
(73) Patentinhaber: Treofan Germany GmbH & Co. KG, 66539 Neunkirchen (DE)
(72) Erfinder: BUSCH, Detlef, 66740 Saarlouis (DE); KLEIN, Dominic, 66539 Neunkirchen (DE); SCHMITZ, Bertram, 57200 Sarreguemines (FR)
(74) Vertreter: Kremer, Viola
(86) Internationale Anmeldenummer: PCT/EP2007/052221
(87) Internationale Veröffentlichungsnummer: WO 2007/113077

(56) Entgegenhaltungen:
- EP-A- 1 685 954
- EP-A2- 1 193 294
- DATABASE WPI Week 200228 Derwent Publications Ltd., London, GB; AN 2002-220936 XP002441555 & JP 2001 323079 A (TOYOBO KK) 20. November 2001 (2001-11-20)

## Beschreibung

Die vorliegende Erfindung betrifft eine peelfähige biaxial orientierte Folie, aus einer Basisschicht und mindestens einer peelfähigen Deckschicht. Die Erfindung betrifft ferner ein Verfahren zur Herstellung der Folie sowie ihrer Verwendung.

Folien aus thermoplastischen Kunststoffen werden in großem Umfang zur Verpackung von Lebensmitteln und anderen Packgütern eingesetzt. Neuere Entwicklungen auf dem Verpackungsgebiet betreffen Folien aus biologisch abbaubaren Polyestern, wie beispielsweise Polymilchsäure (PLA). Derartige Folien gelten als besonders umweltverträglich, da sie auf nachwachsenden Rohstoffen basieren und durch Kompostierung entsorgt werden können. Diese Materialien unterscheiden sich jedoch grundlegend von den olefinischen Polymeren, wie Polyethylen oder Polypropylen, welche für Verpackungsfolien in großem Umfang eingesetzt werden. Auch die Übertragung der technischen Lehren über Polyesterfolien gelingt oft nicht, da die gleichen oder ähnliche Maßnahmen bei PLA-Folien oft nicht die erwünschte Wirkung erzielen.

Der Erfolg von Verpackungsfolien aus thermoplastischen Polymeren beruht auf den guten optischen und mechanischen Eigenschaften sowie auf der einfachen Verschweißbarkeit oder Siegelfähigkeit der Folien. Siegelfähige polyolefinische Folien besitzen im allgemeinen eine Deckschicht aus einem olefinischen Polymeren, das einen niedrigeren Kristallitschmelzpunkt besitzt als das Polymere der Basisschicht der Folie. PLA-Folien haben im allgemeinen Siegelschichten aus amorphen nicht kristallisierbaren PLA-Polymeren auf einer Basisschicht aus teilkristallinem PLA. Zum Siegeln werden die Folien übereinandergelegt und 10 bis 20 °C unter den Kristallitschmelzpunkt, bzw. 20 - 40°C über den Glaspunkt des PLA-Polymeren erwärmt, d. h. die Deckschichten werden nicht vollständig aufgeschmolzen. Die erzielte Haftung der gesiegelten Schichten sollte mindestens 1,5 - 2 N/15mm betragen, um eine ausreichende Siegelnahtfestigkeit sicherzustellen.

Die Siegelnähte haben in vielen Fällen eine höhere mechanische Festigkeit als die Folien selbst, so daß beim Öffnen einer versiegelten Folienpackung diese nicht nur in der Siegelnaht aufgerissen und zerstört wird, sondern vielmehr der Riß sich in der Folie selbst fortsetzt und dann unkontrolliert weiterreißt. Ein solches Öffnen der Naht nennt man Kohäsionsbruch. Aus diesem Grund werden bei Polyolefinfolien anstelle von siegelfähigen Rohstoffen auch sogenannte peelfähige Deckschichten auf die Folienoberfläche aufgebracht. Die peelfähigen Deckschichten bieten einerseits gute Siegeleigenschaften, aber gleichzeitig auch die Möglichkeit, die Siegelnaht wieder kontrolliert zu öffnen, ohne die gesiegelten Materialien zu zerstören.

Solche polyolefinischen peelfähige Deckschichten siegeln nicht nur gegen sich selbst und gegen übliche siegelfähige Deckschichten beispielsweise aus Propylenco- und/oder -terpolymeren, sondern auch sehr gut gegen Oberflächen aus Propylenhomopolymeren. Damit ist es möglich, diese Folien als Deckelverschluß für Behältnisse aus Propylenhomopolymer zu verwenden und somit Einstoffverpackungen aus Polypropylen auch bei Behältnissen mit Deckelverschlüssen wie z.B. Joghurtbecher usw. anzubieten.

Auch für PLA-Folien ist ein derartiges Eigenschaftsprofil wünschenswert, um die PLA-Folien gleichfalls in solchen Peel-Anwendungen einzusetzen und sich die Vorteile der biologischen Abbaubarkeit auch in diesem Segment zu Nutze zu machen. Siegelfähige PLA-Folien weisen jedoch im allgemeinen sehr hohe Siegelnahtfestigkeiten auf, beispielsweise 6 - 7 N/15mm, wodurch ein kontrolliertes Öffnen einer Verpackung in der Siegelnaht vergleichsweise noch schwieriger ist als bei polyolefinischen Siegelfolien, die üblicherweise mit einer Co- oder Terpolmyer Siegelschicht in einem Bereich von 2,5 - 3,5 N/15mm liegen. Daher kommt es bei PLA Folien noch häufiger zu dem vorstehend erwähnten Kohäsionsbruch und zu einem unkontrollierten Aufreißen der Verpackung. Eine Modifizierung von PLA-Folien ist daher unbedingt erforderlich wenn diese als Peelfolien eingesetzt werden sollen. Dabei ist zu beachten, daß eine Modifizierung zur Einstellung der Peel-Eigenschaften die vorteilhafte biologische Abbaubarkeit nicht beeinträchtigen darf. Selbstverständlich müssen auch die guten optischen Eigenschaften, wie hohe Transparenz und Glanz und ein gutes Verarbeitungsverhalten, sowie mechanische Eigenschaften erhalten bleiben.

EP1193294 A2 beschreibt eine aliphatische Polyesterzusammensetzung, die biologisch abbaubar und transparent ist, gute Heißsiegeleigenschaften bei niedriger Temperatur, Peelfähigkeit und Klebevermögen zum Substrat aufweist, sowie eine Folie oder ein Laminat aus dieser Zusammensetzung. Die Zusammensetzung enthält aliphatische Polyester, Milchsäure und eine Komponente welche die Haftfähigkeit erhöht.

JP2001-323079 beschreibt eine Polyesterfolie mit einer speziellen Oberflächenrauheit.

Die EP1685954 beschreibt eine coextrudierte mehrlagige Folie für Verpackungsanwendungen, die
(a) mindestens eine erste Schicht, eine zweite Schicht und eine dritte Schicht umfasst;
(b) wobei die erste Schicht eine ersten Oberfläche und eine gegenüberliegende zweite Oberfläche aufweist und einen heißsiegelbaren, wasserlöslichen Polyester enthält, beispielsweise Homopolymere und Copolymere von Polymilchsäure, Polyhydroxyalkanoaten und Mischungen hiervon;
(c) wobei die zweite Schicht eine erste Oberfläche und eine gegenüberliegende zweite Oberfläche aufweist und ein drucksensitives Klebemittel umfasst;
   wobei die zweite Oberfläche der zweiten Schicht in direktem Kontakt mit der ersten Oberfläche der ersten Schicht steht und eine lösbare/wiederversiegelbare Bindung zwischen der ersten und zweiten Schicht bildet; wobei die erste Oberfläche der zweiten Schicht in direktem Kontakt mit der dritten Schicht steht; und
(d) wobei die dritte Schicht ein Polyolefin umfasst.

Die Aufgabe der vorliegenden Erfindung bestand darin, Folien für umweltfreundliche Verpackungen und andere Anwendungen zur Verfügung zu stellen, welche aus nachwachsenden Rohstoffen, wie beispielsweise PLA, hergestellt und umweltfreundlich entsorgt werden können und gute Peeleigenschaften aufweisen. Für bestimmte Anwendungsbereiche sind zusätzlich eine gute Transparenz und hohe Glanzwerte ein gutes Verarbeitungsverhalten sowie gute mechanische Eigenschaften zusätzlich erforderlich.

Die Aufgabe wird gelöst durch eine mehrschichtige Folie aus einer Basisschicht und mindestens einer peelfähigen Deckschicht, wobei die Basisschicht eine kristalline Polymilchsäure enthält, die ein Verhältnis von D-Milchsäureeinheiten zu L-Milchsäureeinheiten (D:L) im Bereich von <10:90 aufweist und einen Erweichungsbereich von 100 bis 170°C und einen Schmelzflußindex (Messung DIN 53 735 bei 2,16 N Belastung und 190°C) von 1 bis 25g/10min aufweist und die Deckschicht 30 bis 80 Gew.-% eines amorphen Polymeren A aus mindestens einer amorphen Polymilchsäure, die 10 bis 20% D-Milchsäureeinheiten und 80 bis 90% L-Milchsäureeinheiten umfasst und 20 bis 70 Gew.-% eines von A verschiedenen biologisch abbaubaren Polymeren B enthält und wobei das Polymere B Stärke, Cellulose oder ein abbaubarer Polyester ist und die Deckschicht eine Dicke von mindesten 3µm aufweist und die peelfähige Deckschicht eine Siegelung im Temperaturbereich von 85 - 120°C gegen sich selbst mit einer Siegelnahtfestigkeit von 1 bis 5 N/15mm ermöglicht, wenn die Siegelung bei einem Siegeldruck von 10N/ cm² und einer Siegelzeit von 500s erfolgt..

Es wurde gefunden, daß für die Verwendung als Peelfolie eine dicke PLA Deckschicht von mindestens 2,5 µm erfindungswesentlich ist, um beim Aufbringen der Siegelfolie auf Behältnisse eine ausreichende Dichtigkeit der Siegelnaht zu gewährleisten. Im Falle zu dünner Siegelschichten von unter 2,5 µm können nicht allen Unebenheiten des Siegelrandes des Behälters ausgeglichen werden, so daß die Siegelschicht nicht in allen Bereichen der Siegelnaht genügend Kontakt mit der Behälterrand hat. Diese Fehlstellen führen zu Undichtigkeiten und einer verschlechterten Haltbarkeit des Packgut. Es wurde gefunden, daß PLA Folien mit einer dicken Siegelschicht von > 3µm eine gute Peelfähigkeit aufweisen, wenn innerhalb des Temperaturbereichs von 85 - 120°C eine Siegelnahtfestigkeit von 1-7N/15mm, vorzugsweise von 1-5N/15mm erzielt werden kann. Damit ist eine hinreichende Festigkeit der Siegelnaht einerseits und gleichzeitig eine kontrollierte Trennung der gesiegelten Schichten möglich.

Überraschenderweise lassen sich derartige Siegeleigenschaften an einer Folie mit PLA Deckschichten einstellen, obgleich dicke Deckschichten aus amorphen PLA-Polymeren wesentlich höhere Siegelnahtfestigkeiten aufweisen, welche das kontrollierte Peelen unmöglich machen. Derartig hohe Siegelnahtfestigkeiten bei dicken Deckschichten erschweren das Öffnen der Siegelnaht derart, daß zu hohe Kräfte erforderlich sind und die Verpackung vom Verbraucher mit anderen Hilfsmitteln geöffnet werden muß, die eigentlich nicht notwendig sein sollen. Gegebenenfalls kommt es bei Peelversuchen mit roher Gewalt auch zum Einreissen der Deckelfolie selbst, so daß kein kontrolliertes Ablösen der Folie am Stück möglich ist. Deckschichten aus kristallinem PLA hingegen siegeln in dem genannten Temperaturbereich gar nicht, d.h. die Siegelnahtfestigkeit liegt im gesamten Bereich zwischen 85 und 130°C unter 0,5 N/15mm.

Die siegelfähige und peelfähige Deckschicht der erfindungsgemäßen Folie ist im allgemeinen aus einer Mischung aus mindestens zwei verschiedenen Polymeren A und B aufgebaut, wobei das Polymere A ein biologisch abbaubares Polymere aus mindestens einer aliphatische Hydroxycarbonsäure ist und das Polymere B ein biologisch abbaubares von A verschiedenes Polymer ist.

Die peelfähige Deckschicht enthält 80 bis <100 Gew.-%, vorzugsweise 85 bis <99 Gew.-% der Polymermischung aus den Komponenten A und B. Unter Mischungen im Sinne der vorliegenden Erfindung sind mechanische Mischungen oder ein Blend aus den Komponenten zu verstehen, mechanische Mischungen werden aus den Einzelkomponenten hergestellt. Im allgemeinen werden hierzu die einzelnen Bestandteile als gepresste Formkörper kleiner Grösse, z. B. linsen-, kugel- oder stäbchenförmiges Granulat, zusammengeschüttet und mit einer geeigneten Rüttelvorrichtung mechanisch gemischt. Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Das Verhältnis (Gewichtsverhältnis) der Komponenten A und B der Mischung kann innerhalb weiter Grenzen variieren. Bevorzugt liegt das Verhältnis der Komponenten A und B in einem Bereich von A:B = 30:70 bis A:B = 80:20, vorzugsweise zwischen A:B = 40:60 bis A:B = 70:30, insbesondere bei A:B = 50:50.

Die Komponente A ist eine amorphe aliphatischen Hydroxycarbonsäuren, nachstehend PHC (Polyhydroxycarbonsäuren) genannt. Hierunter sind Homopolymere oder Mischpolymerisate zu verstehen, welche aus polymerisierten Einheiten von aliphatischen Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff PLA sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxycarbonsäureeinheiten, enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist aus dem Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Geeignete amorphe Polymilchsäuren enthalten D- und L-Milchsäureeinheiten. Hierbei sind insbesondere PLA-Polymere bevorzugt, welche 80 - 98 Gew.-%, vorzugsweise 82 - 95 Gew.-% L-Milchsäureeinheiten, entsprechend 2 bis 20 Gew.-%, vorzugsweise 5 - 18 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxycarbonsäureeinheiten in den entsprechenden Mengen als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren .

Bevorzugt sind Milchsäurepolymere (PLA) mit einem Erweichungsbereich von 60 bis 150°C, vorzugsweise von 65 bis 140°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C. Ein geeignetes PLA ist beispielsweise die Polymilchsäure 4060 D der Fa. Cargill Dow (NatureWorks®).

Die Komponente B ist ein Polymeres aus der Gruppe der biologisch abbaubaren Polymeren. Es kann sich dabei um Kohlehydrate (wie Stärke, Zucker, Zellulose ...) handeln, biologisch abbaubare Polyester (z.B. Copolyester von aliphatischen, cyclischen oder aromatischen Diolen und Dicarbansäuren wie z.B. Glycol, Butandiol, Adipinsäure und Terephtalsäure) oder Proteine, oder andere biologisch abbaubare Substanzen, die zur Reduzierung der Siegelkraft der PHC-Schicht führen. Ebenso kann es sich auch um Mischungen aus zwei oder mehreren der biologisch abbaubaren Substanzen handeln.

Geeignete kommerziell erhältliche Substanzen sind z. B. die Produkte Ecoflex der Fa. BASF oder Mater-Bi der Fa. Novamont. Ecoflex ist ein biologisch abbaubarer statistischer, aliphatischer-aromatischer Copolyester. Mater-Bi ein biologische abbaubares Blend das als Hauptbestandteile Stärke und biologisch abbaubare Polyester enthält.

Das in den aufgeführten Beispielen eingesetzte ECOFLEX F BX 7011 ist ein Copolyester aus den Monomeren 1,4-Butandiol, Adipinsäure und Terephtalsäure mit einem Schmelzbereich von 110-120°C (bestimmt mittels DSC) mit einer Schmelzeviskosität von 2,7 - 4,9 g / 10 min (190 °C, 2,16 kg)
Das in den aufgeführten Beispielen eingesetzte Mater-Bi hat einen Erweichungsbereich von 65 -153°C (bestimmt mittels DSC) mit und einer Schmelzeviskosität von 10 g/10 min (160 °C, 5 kg).

Die erfindungsgemäße Folie ist mehrschichtig aufgebaut und umfaßt mindestens die Basisschicht und mindestens eine peelfähige Deckschicht. Gegebenenfalls kann auf der gegenüberliegenden Seite der Folie eine weitere Deckschicht aufgebracht sein, wobei diese zweite Deckschicht ebenfalls peelfähig oder anders rezepturiert sein kann. Des weiteren ist es möglich zwischen der Basisschicht und der oder den Deckschichten zusätzlich eine oder beidseitig Zwischenschichten anzubringen, wodurch vier oder fünfschichtige Folien erhalten werden.

Die Basisschicht ist im Sinne der vorliegenden Erfindung diejenige Schicht, welche die größte Schichtdicke aufweist und im allgemeinen mehr als 40 % bis 98 %, vorzugsweise 50 bis 90 %, der Gesamtfoliendicke ausmacht. Die Deckschichten sind die Schichten, welche die äußeren Schichten der Folie bilden. Zwischenschichten sind naturgemäß zwischen der Basisschicht und den Deckschichten angebracht.

Die Basisschicht der Folie enthält im allgemeinen mindestens 70 bis <100 Gew.-%, vorzugsweise 85 bis 99 Gew. -%, bezogen auf das Gewicht der Schicht, Polymere aus mindestens einer Hydroxycarbonsäuren. Für die Basisschicht geeignete Polymere sind Polymilchsäuren, welche nur aus Milchsäureeinheiten aufgebaut sind und Mischpolymerisate, welche überwiegend Milchsäureeinheiten (>50%) in Verbindungen mit anderen aliphatischen Hydroxydicarbonsäuren oder auch anderen Dicarbonsäuren enthalten.

Als Rohstoff für die Basisschicht wird ein kristallines Milchsäurepolymeres (PLA) mit einem Erweichungsbereich von 100 bis 170°C, vorzugsweise von 120 bis 160°C, und einen Schmelzflußindex (Messung DIN 53 735 bei 2,16 N Belastung und 190°C) von 1 bis 25g/10 min, vorzugsweise von 1 bis 15 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C. Dabei liegt das Verhältnis von D-Milchsäure zu L-Milchsäure (D:L) im Bereich von < 10:90. Geeignete PLA-Typen sind beispielsweise die Polymilchsäure 4032D oder 4042D der Fa. Cargill Dow (NatureWorks®)

Unter transparenten Folien werden im Sinne der vorliegenden Erfindung solche Folien verstanden, deren Lichtdurchlässigkeit nach ASTM-D 1003-77 über 75 %, vorzugsweise über 90%, liegt. Es wurde gefunden, daß die peelfähige Deckschicht die Trübung der Folie nicht oder nur unwesentlich erhöht.

Die Basisschicht sowie die übrigen Schichten der Folie, einschließlich der peelfähigen ausgerüsteten Deckschicht können zusätzlich übliche Additive, wie Neutralisationsmittel, Stabilisatoren, Gleitmittel und Füllstoffe, enthalten. Sie werden zweckmäßig dem Polymer bzw. der Polymermischung bereits vor dem Aufschmelzen zugesetzt. Als Prozeßhilfsmittel werden innere Gleitmittel, wie beispielsweise Erucasäureamide oder Glycerinmonostearat eingesetzt.

Grundsätzlich können auch weiße oder opake Ausführungsformen der Folie einseitig oder beidseitig mit der peelfähigen Deckschicht versehen werden. Für diese Ausführungsformen werden der Basisschicht Pigmente und/oder vakuoleninitierende Füllstoffe zugesetzt werden. Als Pigment ist TiO₂ bevorzugt und wird in einer Menge von bis zu 10 Gew.-%, vorzugsweise 1 bis 8 Gew.-%, jeweils bezogen auf die Basisschicht, eingesetzt. Vakuoleninitierende Füllstoffe sind vorzugsweise Cycloolefincopolymere, im allgemeinen in einer Menge von 0,5 bis 30Gew.-% bezogen auf das Gewicht der Basisschicht. Einzelheiten hierzu sind in der DE 101 21 150 beschrieben, auf welche hiermit ausdrücklich Bezug genommen wird.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 200 µm, wobei 8 bis 150 µm, insbesondere 10 bis 100 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die Dicke der optionalen zweiten Deckschicht/en wird unabhängig von den anderen Schichten gewählt und liegt jeweils bevorzugt im Bereich von 0,1 bis 5 µm, insbesondere 0,2 bis 3 µm,. Die angegebenen Werte beziehen sich jeweils auf eine Zwischen- oder Deckschicht. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Grundsätzlich sind biaxial orientierte Ausführungsformen der erfindungsgemäßen Folie bevorzugt. Die peelfähige Deckschicht kann jedoch auch bei mehrschichtigen Folien aufgebracht sein, welche nur in eine Richtung, beispielsweise nur in Längsrichtung oder nur in Querrichtung, oder in keine Richtung orientiert sind, d.h. bei sogenannten unorientierten Cast-Folien.

Die Erfindung betrifft weiterhin ein Verfahren zur Herstellung der erfindungsgemäßen mehrschichtigen Folie nach dem an sich bekannten Koextrusionsverfahren, welches nachstehend am Beispiel einer biaxial orientierten Folie im Einzelnen beschrieben wird.

Im Rahmen dieses Verfahrens wird so vorgegangen, dass die den Schichten der Folie entsprechende Schmelze/n durch eine Flachdüse koextrudiert werden, die so erhaltene mehrschichtige Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.
Die Komponenten A und B der peelbaren Deckschicht können dabei sowohl als vorgefertigtes Blend, als auch als Granulatmischung dem Extrusionsprozess zugeführt werden.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen. Die weitere Beschreibung der Folienherstellung erfolgt am Beispiel einer Flachfolienextrusion mit anschließender sequentieller Streckung.

Die Schmelze/n werden durch eine Flachdüse (Breitschlitzdüse) gepreßt, und die ausgepreßte Folie wird auf einer oder mehreren Abzugswalzen bei einer Temperatur von 10 bis 60°C, vorzugsweise 20 bis 40°C, abgezogen, wobei sie abkühlt und sich verfestigt.

Die so erhaltene Folie wird dann längs und quer zur Extrusionsrichtung gestreckt. Das Längsstrecken wird man vorzugsweise bei einer Walzentemperatur der Streckwalzen von 40 bis 130°C, vorzugsweise 50 bis 100°C zweckmäßigerweise mit Hilfe zweier entsprechend dem angestrebten Streckverhältnis verschieden schnell laufender Walzen durchführen und das Querstrecken vorzugsweise bei einer Temperatur von 50 bis 130°C, vorzugsweise 60 bis 120°C mit Hilfe eines entsprechenden Kluppenrahmens. Die Längsstreckverhältnisse können im Bereich von 1,5 bis 4 variiert werden. Bei der Herstellung von Folien mit einer Basisschicht, die vakuoleninitierende Füllstoffe enthält, ist ein höheres Längsstreckverhältnis von 2 bis 5 bevorzugt, wohingegen Folien mit einer transparenten Basisschicht vorzugsweise im Bereich von 1,5 bis 3,5 verstreckt werden. Die Querstreckverhältnisse liegen im Bereich von 3 bis 10, vorzugsweise 4 bis 7.

An die Streckung der Folie schließt sich ihre Thermofixierung (Wärmebehandlung) an, wobei die Folie konvergierend etwa 0,1 bis 10 s lang bei einer Temperatur von 60 bis 150°C gehalten wird (Konvergenz bis zu 25%). Anschließend wird die Folie in üblicher Weise mit einer Aufwickeleinrichtung aufgewickelt.

Gegebenenfalls kann zur Einstellung weiterer Eigenschaften die Folie beschichtet werden. Typische Beschichtungen sind Barriere-, haftvermittelnde, schlupfverbessernd oder dehäsiv wirkende Schichten. Gegebenenfalls können diese zusätzlichen Schichten über in-line Coating mittels wässriger Dispersionen vor der Querverstreckung oder offline aufgetragen werden. Diese Beschichtungen werden auf der, der peelfähigen Deckschicht gegenüberliegenden Seite, aufgebracht.

Zur Charakterisierung der Folien wurden die folgenden Messmethoden benutzt:

### Siegelnahtfestigkeit und Peelfestigkeit

Zur Bestimmung wurden zwei 15 mm breite Folienstreifen mit der peelfähigen Schicht nach innen übereinandergelegt und in einem Temperaturbereich von 80 - 110 °C mit einer Siegelzeit von 0,5 s und einem Siegeldruck von 10 N/cm² (Gerät: Brugger Typ NDS, einseitig beheizte Siegelbacke) versiegelt. Zur Bestimmung der Siegelnahtfestigkeit wird die Peelschicht in einer Breite von 15 mm so gegen sich selbst gesiegelt. Dabei lässt man ungesiegelte Enden über den Siegelbereich hinweg stehen. Diese Enden werden in ein Gerät zur Bestimmung der mechanischen Festigkeit der Fa. Zwick eingespannt. Die maximale Kraft, die benötigt wird um die Siegelnaht auf einer Breite von 15 mm aufzutrennen wird als Siegelnahtfestigkeit bzw. Peelkraft bezeichnet.

### Trübung:

Die Trübung wurde in Anlehnung an ASTM-D 1003 bestimmt.

Die Erfindung wird nachstehend an Hand von Ausführungsbeispielen erläutert

### Beispiel 1:

Es wurde durch Extrusion und anschließende stufenweise Orientierung in Längs- und Querrichtung eine transparente dreischichtige PLA-Folie mit einer Dicke von etwa 50 µm hergestellt. Die Basisschicht bestand zu nahezu 100 Gew.-% aus einer Polymilchsäure mit einem Schmelzpunkt von etwa 160 °C der Fa. Natureworks (4042D). Die Schicht enthielt zusätzlich Stabilisatoren und Neutralisationsmittel in üblichen Mengen. Die peelbare siegelfähige Deckschicht enthielt als Komponente A 60Gew.-% des amorphen siegelfähigen Rohstoffs der Fa. Natureworks (4060D) und 40 Gew.% des biologisch abbaubaren Rohstoffes der Fa. Novamont (Mater-Bi KE 03B).

Die Herstellbedingungen in den einzelnen Verfahrensschritten waren:

| | | |
|---|---|---|
| Extrusion: | Temperaturen | 170 - 200°C |
| | Temperatur der Abzugswalze: | 60°C |
| Längsstreckung: | Temperatur: | 68 °C |
| | Längsstreckverhältnis: | 2,0 |
| Querstreckung: | Temperatur: | 88 °C |
| | Querstreckverhältnis (effektiv): | 5,5 |
| Fixierung: | Temperatur: | 130 °C |
| | Konvergenz: | 10 % |

Auf diese Weise wurde eine biaxial orientierte transparente Folie mit charakteristischem Glanz erhalten. Die Eigenschaften der Folie sind in der Tabelle angegeben. Die peelfähige Deckschicht hatte eine Dicke von 3,6µm, die gegenüberliegende Deckschicht eine Dicke von 2µm, die Basisschicht eine entsprechende Dicke von 44,4µm.

### Beispiel 2:

Es wurde durch Extrusion und anschließende stufenweise Orientierung in Längs- und Querrichtung eine transparente dreischichtige PLA-Folie mit einer Dicke von etwa 50 µm hergestellt. Die Basisschicht bestand zu nahezu 100 Gew.-% aus einer Polymilchsäure mit einem Schmelzpunkt von etwa 160 °C der Fa. Natureworks (4042D). Die Schicht enthielt zusätzlich Stabilisatoren und Neutralisationsmittel in üblichen Mengen. Die peelbare siegelfähige Deckschicht enthielt 40% des amorphen siegelfähigen Rohstoff der Fa. Natureworks (4060D) (Komponente A) und 60 Gew.% des biologisch abbaubaren Rohstoffes der Fa. Novamont (Mater-Bi KE 03B) (Komponente B). Die Herstellbedingungen in den einzelnen Verfahrensschritten waren die Gleichen wie in Beispiel 1, Im Unterschied zu Beispiel 1 betrug die Dicke der siegelfähigen Deckschicht jetzt 5,5 µm. die übrigen Schichtdicken entsprachen Beispiel 1.

### Beispiel 3:

Es wurde durch Extrusion und anschließende stufenweise Orientierung in Längs- und Querrichtung eine transparente dreischichtige PLA-Folie mit einer Dicke von etwa 50 µm hergestellt. Die Basisschicht bestand zu nahezu 100 Gew.-% aus einer Polymilchsäure mit einem Schmelzpunkt von etwa 160 °C der Fa. Natureworks (4032D). Die Schicht enthielt zusätzlich Stabilisatoren und Neutralisationsmittel in üblichen Mengen. Die peelbare siegelfähige Deckschicht enthielt 60% der Komponente A dem amorphen siegelfähigen Rohstoff der Fa. Natureworks (4060D) und 40 Gew.% des Biologisch abbaubaren Rohstoffes von BASF ECOFLEX F BX 7011 .

Die Herstellbedingungen in den einzelnen Verfahrensschritten waren die Gleichen wie in Beispiel 1, die Folie hatte die gleichen Schichtdicken wie in Beispiel 1 angegeben.

### Vergleichsbeispiel 1

Es wurde durch Extrusion und anschließende stufenweise Orientierung in Längs- und Querrichtung eine transparente dreischichtige PLA-Folie mit einer Dicke von etwa 50 µm hergestellt. Die Basisschicht bestand zu nahezu 100 Gew.-% aus einer Polymilchsäure mit einem Schmelzpunkt von etwa 160 °C der Fa. Natureworks (4032D). Die Schicht enthielt zusätzlich Stabilisatoren und Neutralisationsmittel in üblichen Mengen. Die peelbare siegelfähige Deckschicht enthielt 100% des amorphen siegelfähigen Rohstoff der Fa. Natureworks (4060D) (Komponente A) und keine weitere biologisch abbaubare Komponente B. Die Dicke der Deckschicht betrug ∼4 µm.

Die Herstellbedingungen in den einzelnen Verfahrensschritten waren die Gleichen wie in Beispiel 1, somit hatte die Folie nach Beispiel 2 auch die gleichen Schichtdicken wie in Beispiel 1 angegeben.

**Tabelle 1**

| | Trübung/% | Dicke der peelfähigen Deckschicht (µm) | Gesamt Foliendicke/µm |
|---|---|---|---|
| Bsp. 1 | 9 | 3,6 | 50 |
| Bsp. 2 | 18 | 5,5 | 50 |
| Bsp.3 | 23 | 3,6 | 50 |
| Vergl.Bsp.1 | 3 | 3,5 | 50 |

**Tabelle 2.:**

| Siegelnahtfestigkeit N/15mm bei Temp.: | 80°C | 90°C | 100°C | 110°C |
|---|---|---|---|---|
| Bsp. 1 | - | 3,3 | 3,1 | 3,0 |
| Bsp. 2 | - | 0,7 | 2,8 | 3,3 |
| Bsp.3 | - | 1,9 | 2,5 | 2,6 |
| Vergl.Bsp.1 | - | 5,9 | 6,7 | 6,7 |

Die Folien nach den Beispielen ließen sich beim Öffnen der Siegelnaht hervorragend peelen, ohne das es zu Kohäsionsbruch oder unkontrolliertem Einreißen der Folie kam. Die Folie gemäß Vergleichsbeispiel wurde de facto beim Versuch die Siegelnaht zu peelen mechanisch zerstört, bzw. zerrissen.

## Patentansprüche

1. Mehrschichtige Folie aus einer Basisschicht und mindestens einer peelfähigen Deckschicht, **dadurch gekennzeichnet, dass** die Basisschicht eine kristalline Polymilchsäure enthält, die ein Verhältnis von D-Milchsäureeinheiten zu L-Milchsäureeinheiten im Bereich von <10:90 aufweist, und die einen Erweichungs bereich von 100 - 170°C und einen Schmelzflußindex (Messung DIN 53735 bei 2,16 N Belastung und 190°C) ven 1 - 25 g/10 min aufweist und die Deckschicht 30 - 80 Gew.-% eines amorphen Polymeren A aus mindestens einer amorphen Polymilchsäure, die 10-20 % D-Milchsäureeinheiten und 80 - 90 % L-Milchsäureeinheiten umfasst, und 20 bis 70 Gew.-% eines von A verschiedenen biologisch abbaubaren Polymeren B enthält, wobei das Polymere B Stärke, Cellulose oder ein abbaubarer Polyester ist, und die Deckschicht eine Dicke von mindestens 3 µm aufweist und die peelfähige Deckschicht eine Siegelung im Temperaturbereich von 85 - 120°C gegen sich selbst mit einer Siegelnahtfestigkeit von 1 - 5 N/15mm ermöglicht, wenn die Siegelung mit einer Siegelzeit von 0,5s und einem Siegeldruck von 10N/cm² erfolgt.

2. Folie nach Anspruch 1, **dadurch gekennzeichnet, dass** das amorphe Polymere Polymilchsäure mit 10 - 18 Gew.-% D-Milchsäureeinheiten ist.

3. Folie nach Anspruch 1 oder 2, **dadurch gekennzeichnet, dass** die peelfähige Deckschicht 80 bis <100 Gew.-% der Polymermischung aus den Polymeren A und B enthält.

4. Folie nach einem der Ansprüche 1 bis 3, **dadurch gekennzeichnet, dass** die Dicke der peelfähigen Deckschicht 3 bis 10µm beträgt.

5. Folie nach einem der Ansprüche 1 bis 4, **dadurch gekennzeichnet, dass** auf der peelfähigen Deckschicht gegenüberliegenden Seite eine weitere Deckschicht aufgebracht ist.

6. Folie nach einem der Ansprüche 1 bis 5, **dadurch gekennzeichnet, dass** die Folie transparent ist.

7. Verwendung einer Folie nach einem der Ansprüche 1 bis 6 als Verpackungsfolie.

8. Verwendung einer Folie nach einem der Ansprüche 1 bis 6 als Deckelfolie.

## Claims

1. A multilayer film comprising a base layer and at least peelable top layer,
**characterized in that**
the base layer contains a crystalline polylactic acid having a ratio of D-lactic acid units to L-lactic acid units in the range of <10:90 and having a softening range of 100-170°C and a melt-flow index (measured according to DIN 53735 at a load of 2.16N and 190°C) of 1-25 g/10 min, the top layer, comprising 30-80% by weight of an amorphous polymer A of at least one amorphous polylactic acid, containing 10-20% D-lactic acid units and 80% to 90% L-lactic acid units and containing 20% to 70% by weight of a biodegradable polymer B, which is different from A, wherein polymer B is starch, cellulose or a degradable polyester, the top layer is at least 3 µm thick, and the peelable top layer makes it possible to seal the top layer to itself in the temperature range of 85-120°C with a seal strength of 1-5N/15 mm when sealing is performed with a sealing time of 0.5 sec and a sealing pressure of 10 N/cm².

2. The film according to claim 1,
**characterized in that**
the amorphous polymer is polylactic acid with 10-18% by weight D-lactic acid units.

3. The film according to claim 1 or 2,
**characterized in that**
the peelable top layer contains 80% to <100% by weight of the polymer mixture comprised of polymers A and B.

4. The film according to any one of claims 1 to 3,
**characterized in that**
the thickness of the peelable top layer is 3 to 10 µm.

5. The film according to any one of claims 1 to 4, **characterized in that**
another top layer is applied to the side opposite the peelable top layer.

6. The film according to any one of claims 1 to 5,
**characterized in that**
the film is transparent.

7. A use of a film according to any one of claims 1 to 6, as a packaging film.

8. The use of a film according to any one of claims 1 to 6, as a cover film.

## Revendications

1. Feuille multicouche constituée d'une couche de base et d'au moins une couche de couverture pelable, **caractérisée en ce que** la couche de base contient un acide polylactique cristallin ayant un rapport entre unités d'acide lactique D et unités d'acide lactique L qui est inférieur à 10 : 90 et ayant un intervalle de ramollissement compris entre 100 et 170 °C et ayant un indice de fluidité à chaud (mesuré selon la norme DIN 53735 à une charge de 2,16 N et à 190 °C) compris entre 1 et 25 g / 10 min, et la couche de couverture contient 30 à 80 % en poids d'un polymère A amorphe à base d'au moins un acide polylactique amorphe comprenant 10 à 20 % d'unités d'acide lactique D et 80 à 90 % d'unités d'acide lactique L, et 20 à 70 % en poids d'un polymère B biodégradable qui est différent du polymère A, le polymère B étant de l'amidon, du cellulose ou un polyester dégradable, et la couche de couverture présente une épaisseur d'au moins 3 µm, et la couche de couverture pelable peut être scellée sur elle-même, dans une gamme de températures allant de 85 à 120 °C, de manière à ce que la résistance du bord de scellement soit comprise entre 1 et 5 N/cm² lorsque le scellement est réalisé avec une durée de scellement de 0,5 s et une pression de scellement de 10 N/cm².

2. Feuille selon la revendication 1, **caractérisée en ce que** ledit polymère amorphe est de l'acide polylactique comportant 10 à 18 % en poids d'unités d'acide lactique D.

3. Feuille selon les revendications 1 ou 2, **caractérisée en ce que** la couche de couverture pelable contient 80 à <100 % en poids du mélange de polymères constitué des polymères A et B.

4. Feuille selon l'une des revendications 1 à 3, **caractérisée en ce que** l'épaisseur de la couche de couverture pelable est comprise entre 3 et 10 µm.

5. Feuille selon l'une des revendications 1 à 4, **caractérisée en ce qu'**une autre couche de couverture est appliquée sur le côté situé à l'opposé à la couche de couverture pelable.

6. Feuille selon l'une des revendications 1 à 5, **caractérisée en ce que** ladite feuille est transparente.

7. Utilisation d'une feuille selon l'une des revendications 1 à 6 en tant que feuille d'emballage.

8. Utilisation d'une feuille selon l'une des revendications 1 à 6 en tant que feuille de couvercle.
